# EUROPEAN PATENT APPLICATION

(11) **EP 4 568 100 A1**
(43) Date of publication of application: **11.06.2025**
(21) Application number: 23214188.7
(22) Date of filing: 05.12.2023
(51) Int. Cl.: H02P 5/74, H02P 27/06

(54) **DRIVE SYSTEM AND ASSOCIATED METHOD**

(71) Applicant: GE Energy Power Conversion Technology Limited, Rugby, Warwickshire CV21 1BD (GB)
(72) Inventor: BASTIDE, Jeremy, 91140 VILLEBON SUR YVETTE (FR); GRUAU, Nicolas, 91140 VILLEBON SUR YVETTE (FR); BERTONCINI, Eric, 91140 VILLEBON SUR YVETTE (FR); JACQUEMOT, Philippe, 91140 VILLEBON SUR YVETTE (FR); BLANVILLE, Yoann, 91140 VILLEBON SUR YVETTE (FR)
(74) Representative: Casalonga

(57) **Abstract**

A drive system (1) comprising a connecting circuit and N drive units (2, 3), each drive unit comprising an electric machine (12, 13), a primary power converter (8, 9) configured to supply the electric machine, is proposed.

The drive system further comprises:
- an auxiliary power converter (18) connected to each of the electric machine of the drive unit through the connecting circuit, and
- an auxiliary control circuit (100) configured to control the auxiliary power converter and being configured:
o to connect the auxiliary power converter (18) to the electric machine of a drive unit of the N drive units through the connecting circuit, the said drive unit being a target drive unit,
o to drive the said electric machine from the auxiliary power converter (18),
o to disconnect the primary power converter of the target drive unit from the associated electric machine of the target drive unit.

## Description

The present invention concerns drive systems.

The present invention relates more particularly to drive system comprising a plurality of power converters and electric machines, each electric machine being supplied by a power converter, and a method for operating such a drive system.

Generally, a drive system comprises at least one power converter and an electric machine supplied by the power converter.

The electric machine may drive a system of a plant.

When a fault is detected, the fault may be for example an earth fault or a short circuit in the power converter so that the drive system is stopped.

The electric machine stops to drive the said system generating production losses.

Further, when the power converter needs to be stopped for maintenance operation, the electric machine is stopped so that electric machine stops to drive the said system generating production losses.

It is therefore proposed to overcome wholly or partially this disadvantage.

In view of the foregoing the invention proposes a drive system comprising a connecting circuit and N drive units, each drive unit comprising an electric machine, a primary power converter configured to supply the electric machine, N being a no nil integer.

The drive system further comprises:
- an auxiliary power converter connected to each of the electric machine of the drive unit through the connecting circuit, and
- an auxiliary control circuit configured to control the auxiliary power converter and being configured:
   ∘ to connect the auxiliary power converter to an electric machine of a drive unit of the N drive units through the connecting circuit, the said drive unit being a target drive unit,
   ∘ to drive the said electric machine from the auxiliary power converter,
   ∘ to disconnect the primary power converter of the target drive unit from the associated electric machine of the target drive unit.

The auxiliary power converter replaces the primary power converter of the target drive unit so that the electric machine of the target drive unit is still functional. As the auxiliary control circuit controls the connecting circuit and the auxiliary power converter, the replacement of the primary power converter of the target drive unit by the auxiliary power converter is fast enough to limit the electric machine speed drop of the electric machine of the faulty drive unit and limit the impact on the system.

Preferably, the auxiliary control circuit is further configured to detect a fault of one of the N drive units, the target drive unit being the faulty drive unit, and when the fault is an earth fault or a short circuit, the auxiliary power converter is further configured to control that the electric machine of the faulty drive unit is functional before connecting the auxiliary power converter to the said electric machine if the said electric machine is functional.

Advantageously, the drive system further comprises a global control circuit and wherein each drive unit further comprises a local control circuit configured to monitor the said drive unit and control the primary power converter of the said drive unit, the local control circuit of the target drive unit being configured to supply the electric machine of the target drive unit with a first power, the global control circuit being configured to:
- control the local control circuit of the target drive unit and the auxiliary control circuit so that the sum of the power supplied by the primary power converter of the target drive unit and the power supplied by the auxiliary power converter is equal to the first power, the power supplied by the primary power converter of the target drive unit being decreasing over the time and the power supplied by the auxiliary power converter being increasing over the time, and
- control the auxiliary control circuit to disconnect the primary power converter of the target drive unit from the associated electric machine when the power supplied by the primary power converter of the target drive unit is nil and the power supplied by the auxiliary power converter is equal to the first power.

Preferably:
- each drive unit comprises a first switch connecting the primary power converter of the said drive unit to the electric machine of the said drive unit, and
- the connecting circuit comprises a primary switch and a first switching module, the first switching module being configured to connect the electric machine of each drive unit to the primary switch, the auxiliary control circuit being configured to open the first switch of the target drive unit when disconnecting the primary power converter from the associated electric machine of the target drive unit.

Advantageously:
- the electric machine of the target drive unit comprises a wounded rotor including windings supplied by a supply module of the target drive unit, and
- the auxiliary control circuit being configured to control the supply module of the target drive unit so that the said supply module stops to supply the windings of the wounded rotor of the electric machine of the target drive unit when disconnecting the primary power converter of the target drive unit.

Preferably, the connecting circuit comprises a second switching module supplied by a secondary power converter, the auxiliary control circuit being configured to control the second switching module, the secondary power converter and the supply module of the target drive unit so that the said supply module supplies the windings of the rotor of the target drive unit from a current delivered by the secondary power converter when connecting the auxiliary power converter.

Another object of the invention relates to a method for controlling a drive system comprising a connecting circuit and N drive units, each drive unit comprising an electric machine and a primary power converter supplying the electric machine, N being a no nil integer.

The method comprises:
- (a) connecting an auxiliary power converter to an electric machine of a drive unit of the N drive units through the connecting circuit, the said drive unit being a target drive unit,
- (b) supplying the said electric machine from the auxiliary power converter, and
- (c) disconnecting the primary power converter from the associated electric machine of the target drive unit.

Preferably, the method comprises:
- detecting a fault of one of the drive unit before processing steps (a), (b), (c), the target drive unit being the faulty drive unit,
- processing step (c) when the faulty drive unit is detected,
- processing step (a) when the primary power converter of the faulty drive unit is disconnected from the electric machine of the faulty drive unit, and
- supplying the electric machine of the faulty drive unit from the auxiliary power converter.

Advantageously, the method further comprises controlling the electric machine of the faulty drive unit when the fault is an earth fault or a shot circuit and connecting the auxiliary power converter to the said electric machine if the said electric machine is functional.

Preferably, disconnecting the primary power converter of the target drive unit comprises stopping the said power converter.

Preferably, the primary power converter of the target drive unit supplies the electric machine of the target drive unit with a first power, the method comprises:
- supplying the said electric machine from the auxiliary power converter comprises controlling the primary power converter of the target drive unit and the auxiliary power converter so that the sum of the power supplied by the primary power converter of the target drive unit and the power supplied by the auxiliary power converter is equal to the first power, the power supplied by the primary power converter of the target drive unit being decreasing over the time and the power supplied by the auxiliary power converter being increasing over the time, and
- disconnecting the primary power converter of the target drive unit from the associated electric machine when the power supplied by the primary power converter of the target drive unit is nil and the power supplied by the auxiliary power converter is equal to the first power.

Advantageously:
- each drive unit comprises a first switch connecting the primary power converter to the electric machine of the said drive unit, and
- the connecting circuit comprises a primary switch and a first switching module, the first switching module connecting the electric machine of each drive unit to the primary switch,
- the first switch of each drive unit being closed, the primary switch being open and the first switching module being configured so that any current circulates through the first switching module,
- disconnecting the primary power converter of the target drive unit comprises:
- opening the first switch of the target drive unit.

Advantageously, connecting the auxiliary power converter comprises:
- starting the auxiliary power converter to deliver an AC voltage,
- synchronizing the AC voltage delivered by the auxiliary power converter with an AC voltage supplying the electric machine of the target drive unit,
- closing the primary switch, and
- controlling the first switching module to connect the electric machine of the target drive unit to the closed primary switch.

Preferably, the connecting circuit comprises a second switching module supplied by a secondary power converter, connecting the auxiliary power converter comprising controlling the second switching module, the secondary power converter and the supply module of the target drive unit so that the said supply module supplies the windings of the rotor of the target drive unit from a current delivered by the secondary power converter.

Preferably, the drive system comprising N main switch, a first end of each main switch being connected to supply grid and the second end of each main switch being connected to the primary power converter of a drive unit to supply the primary power converter from the grid, disconnecting the primary power converter of the target drive unit comprises opening the main switch supplying the said primary power converter.

Advantageously:
- the electric machine of the target drive unit comprises a wounded rotor including windings supplied by a supply module of the target drive unit,
- disconnecting the primary power converter of the target drive unit comprises controlling the supply module of the target drive unit so that the said supply module stops to supply the windings of the wounded rotor of the electric machine of the target drive unit.

Other characteristics and advantages of the invention will emerge on reading the following description of embodiments of the invention, provided solely by way of non-limiting examples and with reference to the drawings in which:
Figure 1 illustrates schematically a first example of a drive system according to the invention,
Figure 2 illustrates schematically a second example of a drive system according to the invention,
Figure 3 illustrates a first example of a method to control the drive system according to the invention, and
Figure 4 illustrates a second example of a method to control the drive system according to the invention.

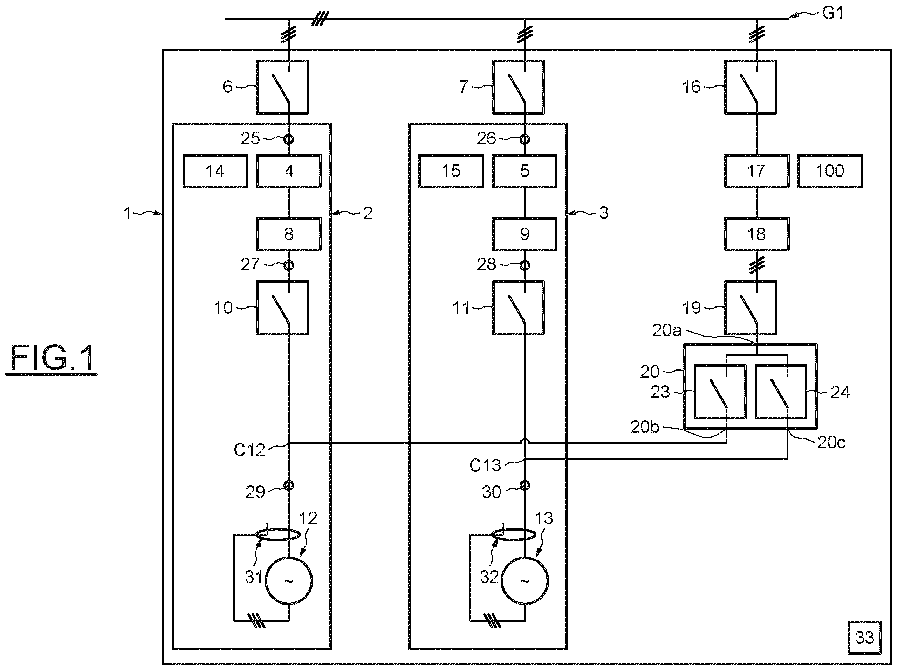

Figure 1 illustrates schematically a first example of a drive system 1.

The drive system 1 is connected to a grid G1.

The drive system comprises N drive unit(s), N being an no nil integer.

It is assumed that N is equal to two so that the drive system comprises two drive units 2, 3.

In another embodiment N may equal to one or greater than two.

Each drive unit 2, 3 may comprise a transformer 4, 5 comprising a primary circuit connected to a second end of a main switch 6, 7, a primary power converter 8, 9 comprising an input connected to a secondary circuit of the transformer 4, 5, a first switch 10, 1 1 comprising a first end connected to an output of the primary power converter 8, 9, and an electric machine 12, 13.

Each drive unit 2, 3 further comprises a local control circuit 14, 15 monitoring the said drive unit 2, 3 and controlling the primary power converter 8, 9, the main switch 6, 7 and the first switch 10, 11 of the said drive unit 2, 3.

The main switches 6, 7 and the first switches 10, 11 comprise for example circuit breakers.

The second end of the first switch 10, 11 of the drive unit 2, 3 is connected to the electric machine 12, 13 of the said drive unit 2, 3.

The first end of each main switch 6, 7 is connected to the grid G1.

The primary power converter 8, 9 supplies the stator windings of the electric machine 12, 13 with power from the grid G1.

The drive system 1 further comprises an auxiliary main switch 16, may comprise an auxiliary transformer 17 comprising a primary circuit connected to the grid G1 through the main switch 16, an auxiliary power converter 18 comprising an input connected to a secondary circuit of the transformer 17, and an auxiliary control circuit 100 controlling the auxiliary main switch 16 and the auxiliary power converter 18, and intended to communicate with the local control circuit 14, 15.

The auxiliary control circuit 100 is intended to connect the auxiliary power converter 18 to the electric machine of a drive unit of the N drive units 2, 3 through the connecting circuit, the said drive unit being a target drive unit.

The auxiliary control circuit 100 is further intended to drive the said electric machine from the auxiliary power converter 18, and to disconnect the primary power converter of the target drive unit from the associated electric machine of the target drive unit.

The auxiliary power converter 18 is intended to be connected to each of the electric machines 12, 13 of the drive units 2, 3 through a connecting circuit.

The connecting circuit comprises a primary switch 19 and a first switching module 20 comprising an input 20a and N outputs 20b, 20c.

The auxiliary control circuit 100 is further intended to control the primary switch 19 and the first switching module 20.

The primary switch 19 connects an output of the auxiliary power converter 18 to an input 20a of the first switching module 20.

Each drive unit 2, 3 comprises a first connection point C12, C13 between the first switch 10, 11 of the said drive unit 2, 3 and the electric machine 12, 13 of the said drive unit 2, 3.

A first output 20b of the first switching module 20 is connected to the first connection point C12 of the first drive unit 2 and the second output 20c of the first switching module 20 is connected to the first connection point C13 of the second drive unit 3. It is assumed that the machines 12, 13 and the grid G1 have three phases, the transformers 8, 9 being three phase transformers.

Each drive unit 2, 3 further comprises a first current sensor 25, 26 between the main switch 6, 7 and the primary circuit of the transformer 4, 5 of the said drive unit, a second current sensor 27, 28 between the output of the primary power converter 8, 9 of the said drive unit and the first switch 10, 11 of the said drive unit 2, 3.

Each drive unit 2, 3 comprises a voltage sensor 29, 30 between the second switch 14, 15 and the machine 12, 13 of the said drive unit 2, 3, for example between the first connection point C12, C13 and the electric machine 12, 13 of the said drive unit 2, 3.

Each drive unit 2, 3 further comprises a leakage current detector 31, 32 to detect a fault of the machine 12, 13 of the said drive unit, the fault may be an earth fault or a short circuit of the stator windings and associated supply cables.

The measurements of the first current sensor 25, the second current sensor 27, the voltage sensor 29, and the leakage current detector 31 of the first drive unit 2 are delivered to the local control circuit 14 of the first drive unit 2.

The measurements of the first current sensor 26, the second current sensor 28, the voltage sensor 30, and the leakage current detector 32 of the second drive unit 3 are delivered to the local control circuit 15 of the first drive unit 3.

The drive system 1 further comprises a global control circuit 33 intended to communicate with the local control circuit 14, 15, and the auxiliary control circuit 100.

In another embodiment, the machines 12, 13 and the grid G1 may have one, two or more than three phases, the transformers 8, 9, the auxiliary transformer 17, the main switches 6, 7, auxiliary main switch 16, first switches 10, 11, primary auxiliary switch 19and the switches 23, 24 of the first switching module 20 being adapted to the number of phase(s).

Each machine 12, 13 comprises a self-excited rotor, for example a permanent magnet rotor, an induction rotor comprising a squirrel cage including bars or windings, or a reluctance rotor.

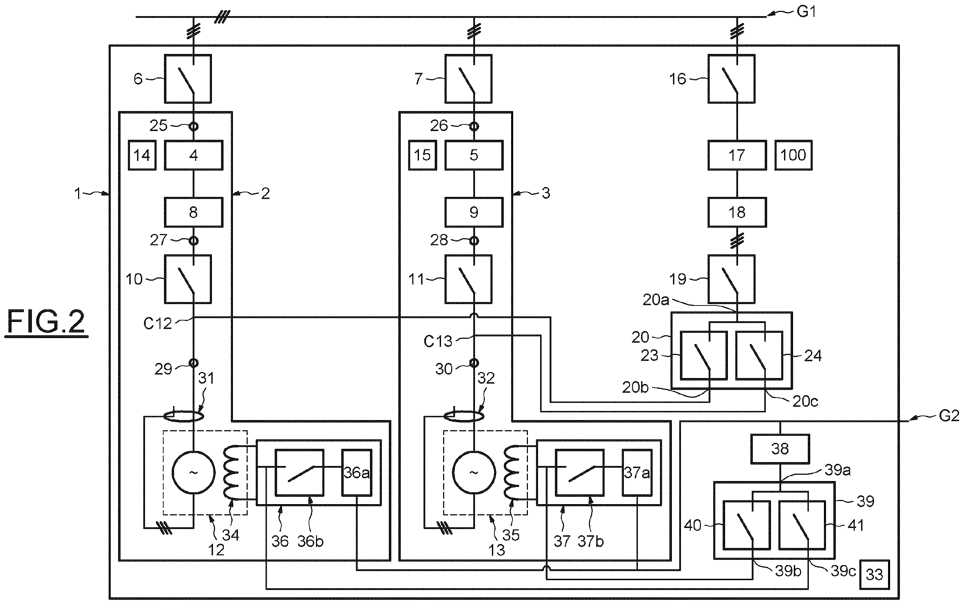

Figure 2 illustrates schematically a second example of the drive system 1.

The second example of the drive system 1 differs from the first example of the drive system 1 illustrated in figure 1 in that each machine 12, 13 comprises a wounded rotor including windings 34, 35 supplied by a supply module 36, 37 of the said drive unit 2, 3, a secondary power converter 38, and a second switching module 39.

Each supply module 36, 37 comprises a power converter 36a, 37a supplied by a second grid G2 and a switch 36b, 37b.

A first end of the switch 36b, 37b of the supply module 36, 37 of each drive unit 2, 3 is connected to the windings 34, 35 of the wounded rotor of the machine 12, 13 of the said drive unit 2, 3 and the second end of the said switch 36b, 37b is connected to an output of the power converter 36a, 37a of the said drive unit 2, 3.

The power converter 36a, 37a of each drive unit 2, 3 is intended to deliver on its output a direct current DC to supply the windings of the machine 12, 13 of the said drive unit 2, 3.

The secondary power converter 38 comprises an input connected to the second grid G2 and an output connected to an input 39a of the second switching module 39.

The secondary power converter 38 is intended to deliver a DC current at the input 39a of the second switching module 39.

In another embodiment, the secondary power converter 38 is intended to deliver a AC current at the input 39a of the second switching module 39 to supply the rotor of each machine 12, 13 through a brushless exciter.

The second switching module 39 further comprises N outputs 39b, 39c.

A first output 39b of the second switching module 39 is connected to the first end of the switch 36b of the supply module 36 of the first drive unit 2, and the second output 39c of the second switching module 39 is connected to the first end of the switch 37b of the supply module 37 of the second drive unit 3.

The second switching module 39 comprises N switches 40, 41.

A first switch 40 of the second switching module 39 connects the first output 39b to the input 39a of the second switching module 39, and the second switch 41 of the second switching module 39 connects the second output 39c to the input 39a of the second switching module 39.

The secondary power converter 36a and the switch 36b of the supply module 36 of the first drive unit 2 are controlled by the local control circuit 14 of the said drive unit 2.

The secondary power converter 37a and the switch 37b of the supply module 37 of the second drive unit 3 are controlled by the local control circuit 15 of the said drive unit 3.

The secondary power converter 38 and the second switching module 39 are controlled by the auxiliary control circuit 100.

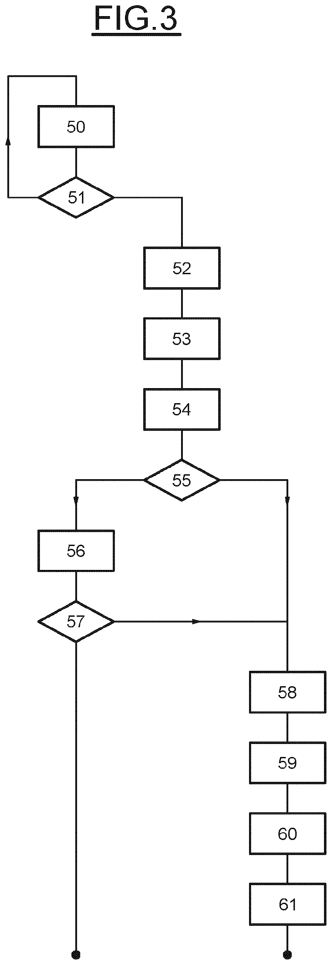

Figure 3 illustrates an example of a first method to control the drive system 1 when a drive unit of the N drive units is defaulting.

It is assumed that the local control circuits 14, 15 and the auxiliary control circuit 100 are started by the global control circuit 33.

It is further assumed that the N main switches 6, 7 and the auxiliary main switch 16, the N first and switches 10, 11 of the N drive units 2, 3 are closed so that at least one current circulates through the said switches, and that the primary power converter 8, 9 of the N drive units 2, 3 is controlled by the local control circuit 14, 15 of the drive units 2, 3 so that the said power converters 8, 9 are in an active mode, it is to say that the primary power converter 8 of the first drive unit 2 supplies the machine 12 and the primary power converter 9 of the second drive unit 3 supplies the machine 13.

The primary switch 19, and the N switches 23, 24 of the first switching module 20 are open so that no current circulates through the said switches.

The auxiliary power converter 18 is controlled by the auxiliary control circuit 100 so that the auxiliary power converter 18 is in a standby mode, it is to say that the auxiliary power converter 18 delivers no voltage on its output.

Further, if the drive units 2, 3 comprise supply modules 36, 37 (figure 2), the switches 36b, 37b of the supply modules 36, 37 are closed and the power converter 36a, 37a of the supply module 36, 37 of the N drive units 2, 3 is controlled by the local control circuit 14, 15 of the drive units 2, 3 so that the said convert 36a, 37a is in an active mode, it is to say that the power converter 36a of the supply module 36 of the first drive unit 2 supplies the windings of the rotor of the machine 12 of the first drive unit 2 and the power converter 37a of the supply module 37 of the second drive unit 3 supplies the windings of the rotor of the machine 13 of the second drive unit 3.

The N switches 40, 41 of the second switching module 39 are open so that no current circulates through the said switches, and the secondary power converter 38 is in a standby mode, it is to say that the auxiliary power converter 18 delivers no voltage on its output.

The auxiliary control circuit 100 monitors the local control circuits 14, 15 of the drive units 2, 3.

In a step 50, the local control circuits 14, 15 monitor and control the drive units 2, 3 from measurements delivered by the first and second current sensors 25, 26, 27, 28 and the voltage sensors 29, 30

The local control circuits 14, 15 further monitor the machines 12, 13 from measurements delivered by the leakage current detectors 31, 32.

If the local control circuit 14, 15 detects that the drive units 2, 3 still work as planned (step 51), the method continues to step 50.

If a local control circuit 14, 15 detects that one of the drive units 2, 3 is in default (step 51), or the auxiliary control circuit 100 detects that a local control circuit 14, 15 is in default, the method continues to step 52.

It is assumed in the following that the first drive unit 2 is in default so that the first drive unit 2 is the target drive unit.

From step 52 to step 54, the auxiliary control circuit 100 disconnects the primary power converter 8 from the associated electric machine 12 of the faulty first drive unit 2.

In step 52, the auxiliary control circuit 100 stops the primary power converter 8 of the first drive unit 2 so that the output of the primary power converter 8 delivers no current.

In step 53, the auxiliary control circuit 100 opens the first switch 10 of the first drive unit 2 and the switch 36b of the supply module 36 of the first drive unit 2 to stop to supply the windings of the rotor of the machine 12.

If the machine 12 does not comprise a wounded rotor, for example the machine 12 comprises a permanent magnet rotor or a squirrel cage, the auxiliary control circuit 100 only opens the first switch 10 of the first drive unit 2, the first drive unit 2 does not comprise the supply module 36.

In step 54, the auxiliary control circuit 100 opens the main switch 6 of the first drive unit 2.

During steps 51 to 54, the auxiliary control circuit 100 further identifies the defaulting component of the first drive unit 2, for example the primary power converter 8 or the machine 12.

The fault may be a default of the primary power converter 8 of the first drive unit 2 for example a short circuit or an earth fault.

The fault may be a default of the machine 12 of the first drive unit 2 for example a short circuit or an earth fault.

If the fault is a short circuit or an earth fault of the first drive unit 2 (step 55), in step 56, the auxiliary control circuit 100 tests if the machine 12 is still functional so that the machine 12 supplied by power is still working to drive a load on a shaft of the rotor.

If the machine 12 is not functional anymore (step 57), the method ends.

It the fault is not a short circuit and not an earth fault (step 55), or if the machine 12 is functional in case of a short circuit or an earth fault (step 56), the auxiliary control circuit 100 considers that the primary power converter 8 of the first drive unit 2 is in default.

In steps 58 to 61, the auxiliary control circuit 100 connects the auxiliary power converter 18 to the electric machine 12 of the faulty first drive unit 2 through the connecting circuit.

In step 58, the auxiliary control circuit 100 controls the auxiliary power converter 18 so that the said power converter delivers an AC voltage on its output and controls the auxiliary power converter 18 so that the AC voltage delivered by the auxiliary power converter 18 is synchronized with the AC voltage supplying the electric machine 12 of the target drive unit 2.

In step 59, when the AC voltage delivered by the auxiliary power converter 18 is synchronized with the AC voltage supplying the electric machine 12 of the target drive unit 2, the auxiliary control circuit 100 closes the primary switch 19 and the first switch 23 of the first switching unit 20.

In step 60, the auxiliary control circuit 100 closes the first switch 40 of the second switching module 39 so that the windings 34 of the rotor of the machine 12 is supplied by the secondary power converter 38 controlled by the auxiliary control circuit 100.

If the machine 12 does not comprise a wounded rotor, the method processes step 59 and continues to step 61.

When one drive unit is in default and the default is not caused by a default of the machine of the said drive unit, the disconnection of the power converter of the said drive unit and the connection of the auxiliary power converter to the machine of the said drive unit to supply the said machine allows to increase the operating rate of the said machine to reduce the production losses of the defaulting drive unit.

Further, according to the inertia of the rotor of the said machine, the inertia of the load connected to the rotor, the commutation duration of the switches 6, 7, 10, 11, 23, 24, 36b, 37b, 40, 41, and the duration to start the auxiliary power converter 18, the switching from the power converter of the faulting drive unit to the auxiliary power converter supplying the said machine may happened so that the variation of the torque generated by the said machine during the switching is reduced and smoothed by the inertias.

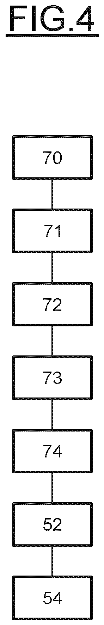

Figure 4 illustrates an example of a second method to control the drive system 1.

The second method is implemented to supply the machine 12, 13 of the target drive unit chosen from the N drive units 2, 3 by the auxiliary power converter 18 when the N drive units 2, 3 are not in fault, for example to perform maintenance operations of the target drive unit while continuing to supply the machine of the target drive unit.

It is assumed that the local control circuits 14, 15 and the auxiliary control circuit 100 are started by the global control circuit 33.

It is further assumed that the N main switches 6, 7 and the auxiliary main switch 16, the N first and switches 10, 11 of the N drive units 2, 3 are closed so that at least one current circulates through the said switches, and that the primary power converter 8, 9 of the N drive units 2, 3 is controlled by the local control circuit 14, 15 of the drive units 2, 3 so that the said power converts 8, 9 are in an active mode, it is to say that the primary power converter 8 of the first drive unit 2 supplies the machine 12 and the primary power converter 9 of the second drive unit 3 supplies the machine 13.

The primary switch 19, and the N switches 23, 24 of the first switching module 20 are open so that no current circulates through the said switches.

The auxiliary power converter 18 is controlled by the auxiliary control circuit 100 so that it is in a standby mode, it is to say that the auxiliary power converter 18 delivers no voltage on its output.

Further, if the drive units 2, 3 comprise supply modules 36, 37 (figure 2), the switches 36b, 37b of the supply modules 36, 37 are closed and the power converter 36a, 37a of the supply module 36, 37 of the N drive units 2, 3 is controlled by the local control circuit 14, 15 of the drive units 2, 3 so that the said convert 36a, 37a is in an active mode, it is to say that the power converter 36a of the supply module 36 of the first drive unit 2 supplies the windings of the rotor of the machine 12 of the first drive unit 2 and the power converter 37a of the supply module 37 of the second drive unit 3 supplies the windings of the rotor of the machine 13 of the second drive unit 3.

The N switches 40, 41 of the second switching module 39 are open so that no current circulates through the said switches, and the secondary power converter 38 is in a standby mode, it is to say that the auxiliary power converter 18 delivers no voltage on its output.

The auxiliary control circuit 100 monitors the local control circuits 14, 15 of the drive units 2, 3.

It is assumed that the target drive unit is the first drive unit 2 and that the primary power converter 8 of the first drive unit 2 supplies the electric machine 12 of the first drive unit 2 with a first power.

During a step 70, the global control circuit 33 receives a command to supply the machine 12 of the first drive unit 2 by the auxiliary power converter 18 and to switch off the primary power converter 8 of the first drive unit 2, for example to proceed maintenance operations.

The command is emitted by an operator through a human machine interface, for example a touchscreen or a button.

During a step 71, the global control circuit 33 controls the auxiliary control circuit 100 to connect the auxiliary power converter 18 to the electric machine 12 of the first drive unit 2 through the connecting circuit.

The auxiliary control circuit 100 controls the auxiliary power converter 18 so that the said power converter delivers an AC voltage on its output and controls the auxiliary power converter 18 so that the AC voltage delivered by the auxiliary power converter 18 is synchronized with the AC voltage supplying the electric machine 12 of the target drive unit 2.

In a step 72, when the AC voltage delivered by the auxiliary power converter 18 is synchronized with the AC voltage supplying the electric machine 12 of the target drive unit 2, the auxiliary control circuit 100 closes the primary switch 19 and the first switch 23 of the first switching unit 20.

The auxiliary power converter 18 delivers no power to the machine 12.

In a step 73, the global control circuit 33 controls the local control circuit 14 of the first drive unit 2 and the auxiliary control circuit 100 so that so that the sum of the power supplied by the primary power converter 8 of the first drive unit 2 and the power supplied by the auxiliary power converter 18 is equal to the first power such a way that the power supplied by the primary power converter 8 of the first drive unit 2 is decreasing over the time and the power supplied by the auxiliary power converter 18 is increasing over the time.

When the power supplied by the primary power converter 8 of the first drive unit 2 is nil and the power supplied by the auxiliary power converter 18 is equal to the first power, the primary power converter 8 of the first drive unit 2 is disconnected from the machine 12. Steps 52 to 54 are performed to disconnect the primary power converter 8 of the first drive unit.

If the machine 12 comprises a wounded rotor, the auxiliary control circuit 100 controls the local control circuit 14 to open the switch 36b of the supply module 36 of the first drive unit 2 to stop to supply the windings of the rotor of the machine 12 and controls the first switch 40 of the second switching module 39 so that the windings 34 of the rotor of the machine 12 are supplied by the secondary power converter 38.

The first switch 40 of the second switching module 39 and the switch 36b of the supply module switch during one step of the steps 71, 72, 73, 74, 52, 54.

The switching of the first switch 40 of the second switching module 39 and the switch 36b of the supply module may be simultaneous.

## Claims

1. Drive system (1) comprising a connecting circuit and N drive units (2, 3), each drive unit comprising an electric machine (12, 13), a primary power converter (8, 9) configured to supply the electric machine, N being a no nil integer, **characterized in that** the drive system further comprises:
- an auxiliary power converter (18) connected to each of the electric machine of the drive unit through the connecting circuit, and
- an auxiliary control circuit (100) configured to control the auxiliary power converter, and being configured:
o to connect the auxiliary power converter (18) to the electric machine of a drive unit of the N drive units through the connecting circuit, the said drive unit being a target drive unit,
∘ to drive the said electric machine from the auxiliary power converter (18),
∘ to disconnect the primary power converter of the target drive unit from the associated electric machine of the target drive unit.

2. Drive system according to claim 1, wherein the auxiliary control circuit (100) is further configured to detect a fault of one of the N drive units (2, 3), the target drive unit being the faulty drive unit, and when the fault is an earth fault or a short circuit, the auxiliary power converter (18) is further configured to control that the electric machine (12, 13) of the faulty drive unit (2, 3) is functional before connecting the auxiliary power converter (18) to the said electric machine if the said electric machine is functional.

3. Drive system according to claim 1 or 2, further comprising a global control circuit (33) and wherein each drive unit (2, 3) further comprises a local control circuit (14, 15) configured to monitor the said drive unit and control the primary power converter (8, 9) of the said drive unit, the local control circuit of the target drive unit being configured to supply the electric machine of the target drive unit with a first power, the global control circuit being configured to:
- control the local control circuit of the target drive unit and the auxiliary control circuit so that the sum of the power supplied by the primary power converter of the target drive unit and the power supplied by the auxiliary power converter is equal to the first power, the power supplied by the primary power converter of the target drive unit being decreasing over the time and the power supplied by the auxiliary power converter being increasing over the time, and
- control the auxiliary control circuit to disconnect the primary power converter of the target drive unit from the associated electric machine when the power supplied by the primary power converter of the target drive unit is nil and the power supplied by the auxiliary power converter is equal to the first power.

4. Drive system according to any one of claims 1 to 3, wherein:
- each drive unit (2, 3) comprises a first switch (10, 11) connecting the primary power converter (8, 9) of the said drive unit to the electric machine (12, 13) of the said drive unit, and
- the connecting circuit comprising a primary switch (19) and a first switching module (20), the first switching module (20) being configured to connect the electric machine (12, 13) of each drive unit (2, 3) to the primary switch (19), the auxiliary control circuit being configured to open the first switch of the target drive unit when disconnecting the primary power converter from the associated electric machine of the target drive unit.

5. Drive system according to any one of claims 1 to 4, wherein:
- the electric machine (12, 13) of the target drive unit (2, 3) comprises a wounded rotor including windings supplied by a supply module (36, 37) of the target drive unit, and
- the auxiliary control circuit (100) being configured to control the supply module of the target drive unit so that the said supply module stops to supply the windings of the wounded rotor of the electric machine of the target drive unit when disconnecting the primary power converter of the target drive unit.

6. Drive system according to claim 5, wherein the connecting circuit comprises a second switching module (39) supplied by a secondary power converter (38), the auxiliary control circuit (100) being configured to control the second switching module, the secondary power converter and the supply module of the target drive unit so that the said supply module supplies the windings of the rotor of the target drive unit from a current delivered by the secondary power converter when connecting the auxiliary power converter.

7. Method for controlling a drive system (1) comprising a connecting circuit and N drive unit, each drive unit (2, 3) comprising an electric machine (12, 13) and a primary power converter (8, 9) supplying the electric machine, N being a no nil integer, **characterized in that** the method comprises:
- (a) connecting an auxiliary power converter (18) to an electric machine of a drive unit of the N drive units through the connecting circuit, the said drive unit being a target drive unit
- (b) supplying the said electric machine from the auxiliary power converter (18), and
- (c) disconnecting the primary power converter of the target drive unit from the associated electric machine of the target drive unit.

8. Method according to claim 7, comprising:
- detecting a fault of one of the drive unit before processing steps (a), (b), (c), the target drive unit being the faulty drive unit,
- processing step (c) when the faulty drive unit is detected,
- processing step (a) when the primary power converter of the faulty drive unit is disconnected from the electric machine of the faulty drive unit, and
- supplying the electric machine of the faulty drive unit from the auxiliary power converter (18).

9. Method according to claim 8, further comprising controlling the electric machine (12, 13) of the faulty drive unit when the fault is an earth fault or a short circuit and connecting the auxiliary power converter (18) to the said electric machine if the said electric machine is functional.

10. Method according to any one of claims 7 to 9, wherein the primary power converter (8, 9) of the target drive unit supplies the electric machine of the target drive unit with a first power, the method comprises:
- supplying the said electric machine from the auxiliary power converter (18) comprises controlling the primary power converter of the target drive unit and the auxiliary power converter (18) so that the sum of the power supplied by the primary power converter of the target drive unit and the power supplied by the auxiliary power converter is equal to the first power, the power supplied by the primary power converter of the target drive unit being decreasing over the time and the power supplied by the auxiliary power converter being increasing over the time, and
- disconnecting the primary power converter (8, 9) of the target drive unit from the associated electric machine when the power supplied by the primary power converter of the target drive unit is nil and the power supplied by the auxiliary power converter is equal to the first power.

11. Method according to any one of claims 7 to 10, wherein:
- each drive unit (2, 3) comprises a first switch (10, 11) connecting the primary power converter to the electric machine (12, 13) of the said drive unit, and
- the connecting circuit comprises a primary switch (19) and a first switching module (20), the first switching module (20) connecting the electric machine (12, 13) of each drive unit (2, 3) to the primary switch,
- the first switch (10, 11) of each drive unit (2, 3) being closed, the primary switch (19) being open and the first switching module (20) being configured so that any current circulates through the first switching module,
- disconnecting the primary power converter of the target drive unit comprises:
- opening the first switch of the target drive unit.

12. Method according to any one of claims 7 to 11, wherein connecting the auxiliary power converter comprises:
- starting the auxiliary power converter (18) to deliver an AC voltage,
- synchronizing the AC voltage delivered by the auxiliary power converter (18) with an AC voltage supplying the electric machine of the target drive unit,
- closing the primary switch (19), and
- controlling the first switching module (20) to connect the electric machine of the target drive unit to the closed primary switch (19).

13. Method according to claim 12, wherein the connecting circuit comprises a second switching module (39) supplied by a secondary power converter, connecting the auxiliary power converter comprising controlling the second switching module, the secondary power converter and the supply module of the target drive unit so that the said supply module supplies the windings of the rotor of the target drive unit from a current delivered by the secondary power converter.

14. Method according to claim 7 to 13, the drive system comprising N main switch (6, 7), a first end of each main switch being connected to supply grid (G) and the second end of each main switch being connected to the primary power converter (8, 9) of a drive unit (2, 3) to supply the primary power converter from the grid, disconnecting the primary power converter of the target drive unit comprises opening the main switch supplying the said primary power converter.

15. Method according to any one of claims 7 to 14, wherein:
- the electric machine (12, 13) of the target drive unit (2, 3) comprises a wounded rotor including windings supplied by a supply module (36, 37) of the target drive unit,
- disconnecting the primary power converter of the target drive unit comprises controlling the supply module of the target drive unit so that the said supply module stops to supply the windings of the wounded rotor of the electric machine of the target drive unit.
